# FASCICULE DE BREVET EUROPEEN

(11) **EP 3 647 202 B1**
(45) Date de publication et mention de la délivrance du brevet: **16.06.2021**
(21) Numéro de dépôt: 19204129.1
(22) Date de dépôt: 18.10.2019
(51) Int. Cl.: B64D 29/06

(54) **ENSEMBLE TURBOMACHINE D'AERONEF COMPORTANT UN CAPOT ARTICULE**
TURBOTRIEBWERK-ANORDNUNG EINES LUFTFAHRZEUGS, DIE EINEN SCHARNIERDECKEL UMFASST
AIRCRAFT TURBINE ENGINE ASSEMBLY COMPRISING A HINGED COVER

(30) Priorité: 23.10.2018 FR 1871281
(43) Date de publication de la demande: 06.05.2020
(73) Titulaire: AIRBUS OPERATIONS, 31060 Toulouse Cedex 9 (FR)
(72) Inventeur: LABARTHE, Christophe, 31660 BUZET SUR TARN (FR); GELIOT, Jean, 31400 TOULOUSE (FR)
(74) Mandataire: Cabinet Le Guen Maillet

(56) Documents cités:
- DE-A1- 1 431 143
- FR-A1- 2 901 245
- FR-A1- 2 935 354
- US-B1- 6 220 546

## Description

### DOMAINE TECHNIQUE

La présente invention concerne un ensemble turbomachine d'un d'aéronef comportant un capot articulé, ainsi qu'un aéronef comportant un tel ensemble.

### ETAT DE LA TECHNIQUE ANTERIEURE

Un aéronef comporte classiquement un fuselage de part et d'autre duquel est fixée une aile. Chaque aile supporte au moins un mât d'accrochage qui supporte à son tour un ensemble turbomachine composé d'une nacelle et d'un moteur. La nacelle forme la surface aérodynamique qui entoure le moteur.

Le mât d'accrochage est fixé entre la structure de l'aile et l'ensemble turbomachine.

De nombreux systèmes, par exemple électriques et hydrauliques, sont disposés au niveau de la jonction entre le mât d'accrochage et l'ensemble turbomachine. Ces systèmes sont masqués par des capots aérodynamiques, comme par exemple certains de ceux constituant la nacelle. Un exemple qui divulgue les caractéristiques du préambule de la revendication 1 est montrée dans le document FR 2901 245 A1.

En particulier, un capot situé en partie haute de la nacelle peut être retiré pour accéder aux systèmes cités ci-dessus et en particulier aux jonctions électriques entre le mât d'accrochage et le moteur.

Actuellement, un tel capot est fixé par plusieurs vis de fixation, et lors des étapes de maintenance, le retrait et la remise en place du capot sont longs.

### EXPOSE DE L'INVENTION

Un objet de la présente invention est de proposer une nacelle qui comporte un capot articulé qui facilite l'accès aux systèmes localisés à la jonction entre le mât d'accrochage et le moteur.

A cet effet, est proposé un ensemble turbomachine d'un aéronef comprenant une nacelle, ladite nacelle présentant une entrée d'air et comportant :
- une structure,
- un capot amont fixé à ladite structure afin de réaliser une surface aérodynamique et s'étendant vers l'arrière depuis l'entrée d'air,
- un capot articulé disposé en partie haute de la nacelle et à l'arrière du capot amont et comportant un bord avant disposé à l'avant du capot articulé, un bord arrière disposé à l'arrière du capot articulé,
- une articulation disposée au niveau du bord avant et fixée entre le capot articulé et la structure, ladite articulation assurant le déplacement du capot articulé entre une position fermée dans laquelle le capot articulé est en continuité aérodynamique avec d'autres capots de la nacelle et une position ouverte dans laquelle le capot articulé libère une ouverture dans la nacelle, et
- un système de verrouillage disposé au niveau du bord arrière, et mobile entre une position de verrouillage dans laquelle il bloque le déplacement du bord arrière par rapport à la structure et une position de déverrouillage dans laquelle il autorise le déplacement du bord arrière par rapport à la structure,
où en position fermée, le bord avant se positionne sous le capot amont,
ledit ensemble turbomachine étant caractérisé en ce que le système de verrouillage comporte à bâbord et à tribord, une plaque de centrage solidaire de la structure et percée d'une fenêtre et un pêne mobile sur la structure, en ce que le système de verrouillage comporte également, pour chaque fenêtre, un plot de centrage solidaire du capot articulé et qui pénètre dans la fenêtre en position fermée et sort de la fenêtre en position ouverte, et en ce que le système de verrouillage comporte également, pour chaque pêne, une gâche solidaire du capot articulé dans lequel le pêne pénètre en position fermée et en sort en position ouverte lorsqu'il est actionné.

Une telle nacelle facilite donc le travail des techniciens, puisque le capot articulé peut être ouvert et fermé facilement et rapidement. Une telle architecture évite également les phénomènes d'écopage.

Avantageusement, l'articulation comporte au moins une bielle à bâbord et à tribord et au moins un vérin, chacune des bielles et chaque vérin présentent une première extrémité montée articulée sur la structure et une deuxième extrémité montée articulée sur le capot articulé.

Avantageusement, la structure comporte à bâbord et à tribord, une lame ressort sur laquelle les premières extrémités de chaque bielle et de chaque vérin sont montées articulées.

Avantageusement, l'ensemble turbomachine comporte, à bâbord et à tribord du capot articulé, un sabot fixé sous le capot amont, chaque sabot présente une fente qui débouche sur l'un des flancs latéraux du sabot et qui est ouverte vers l'arrière, l'ensemble turbomachine comporte également, pour chaque fente, un plot centreur solidaire du capot articulé, et orienté de manière à ce que lorsque le capot articulé passe de la position ouverte à la position fermée, chaque plot centreur pénètre dans la fente et lorsque le capot articulé passe de la position fermée à la position ouverte, chaque plot centreur sort de la fente.

L'invention propose également un aéronef comportant un mât d'accrochage et un ensemble turbomachine selon l'une des variantes précédentes accroché audit mât d'accrochage.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une vue en perspective d'un ensemble turbomachine selon l'invention,
[Fig. 3] est une vue en perspective d'une partie d'une nacelle de l'ensemble turbomachine de la Fig. 2 avec un capot articulé en position ouverte,
[Fig. 4] est une vue en perspective du détail IV de la Fig. 3 montrant un système de verrouillage,
[Fig. 5] est une vue en perspective d'un exemple d'articulation du capot articulé, et
[Fig. 6] est une vue en perspective depuis l'intérieur de la nacelle d'un système de centrage radial.

### EXPOSE DETAILLE DE MODES DE REALISATION

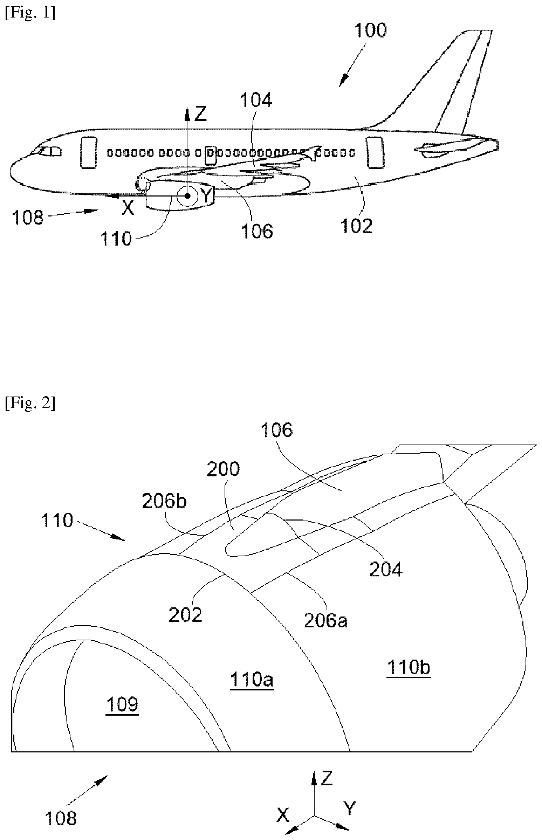

Dans la description qui suit, les termes relatifs à une position sont pris en référence à une nacelle montée sur un aéronef en marche avant, c'est-à-dire comme elle est représentée sur la Fig. 1.

La Fig. 1 montre un aéronef 100 qui comporte un fuselage 102 de part et d'autre duquel est fixée une aile 104. Sous chaque aile 104 est fixé un mât d'accrochage 106 auquel est accroché un ensemble turbomachine 108 composé d'une nacelle 110 et d'un moteur (non représenté) entouré par la nacelle 110.

Dans la description qui suit, et par convention, on appelle X l'axe longitudinal de la nacelle 110 orienté positivement dans le sens d'avancement de l'aéronef 100 et qui est également parallèle à l'axe longitudinal de l'aéronef 100, on appelle Y l'axe transversal de la nacelle 110 qui est horizontal lorsque l'aéronef 100 est au sol, et Z l'axe vertical ou hauteur verticale lorsque l'aéronef 100 est au sol, ces trois directions X, Y et Z étant orthogonales entre elles et formant un repère orthonormé.

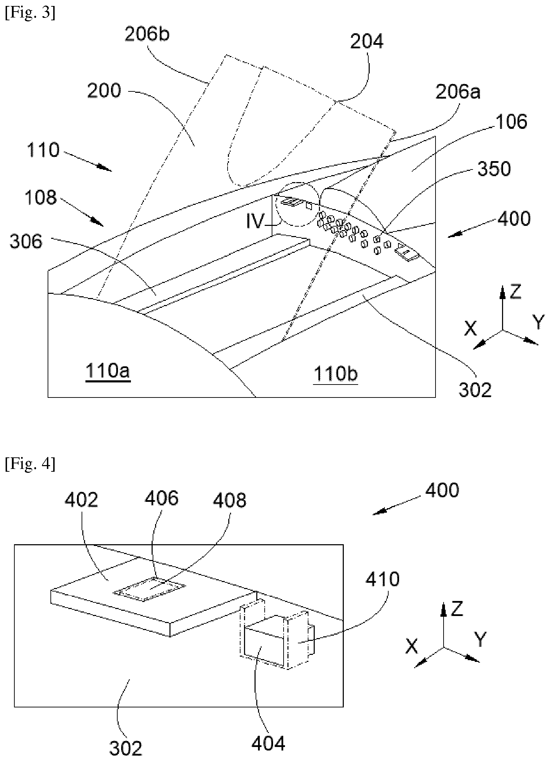

La Fig. 2 montre la jonction entre l'ensemble turbomachine 108 et le mât d'accrochage 106. La nacelle 110 comporte une structure (302, Fig. 3) et plusieurs capots (ou carénages) 110a-b, 200 qui sont fixés à la structure 302 afin de réaliser une surface aérodynamique. De manière connue, la nacelle 110 comprend une entrée d'air 109 par laquelle le moteur aspire l'air nécessaire à son fonctionnement. La nacelle 110 comporte, en particulier, en partie haute et devant le mât d'accrochage 106 (c'est-à-dire entre l'entrée d'air 109 et le mât 106), un capot articulé 200.

Le capot articulé 200 se positionne à l'arrière d'un capot amont 110a qui s'étend lui-même vers l'arrière depuis l'entrée d'air 109. Le capot articulé 200 se positionne entre des capots latéraux 110b.

Le capot articulé 200 comporte quatre bords 202, 204 et 206a-b opposés deux à deux.

Le capot articulé 200 présente plus particulièrement un bord avant 202 qui est disposé à l'avant du capot articulé 200 par rapport à l'axe longitudinal X et qui est globalement parallèle à l'axe transversal Y.

Le capot articulé 200 présente plus particulièrement un bord arrière 204 qui est disposé à l'arrière du capot articulé 200 par rapport à l'axe longitudinal X et qui est également globalement parallèle à l'axe transversal Y.

Le capot articulé 200 présente plus particulièrement deux bords latéraux 206a-b qui sont disposés à bâbord et à tribord du capot articulé 200 et qui sont globalement parallèles à l'axe longitudinal X.

La Fig. 2 montre le capot articulé 200 dans une position fermée et la Fig. 3 montre le capot articulé 200 dans une position ouverte. Sur la Fig. 3, le capot articulé 200 est montré en transparence (traits mixtes fins).

Le capot articulé 200 est monté articulé sur la structure 302 de la nacelle 110 entre la position fermée (Fig. 2) dans laquelle le capot articulé 200 est en continuité aérodynamique avec les autres capots 110a-b de la nacelle 110 et la position ouverte (Fig. 3) dans laquelle le capot articulé 200 libère une ouverture dans la nacelle 110 afin d'accéder à l'intérieur de la nacelle 110 et en particulier aux systèmes de l'aéronef 100 qui s'étendent entre le mât d'accrochage 106 et le moteur comme, en particulier, un boîtier électrique 350.

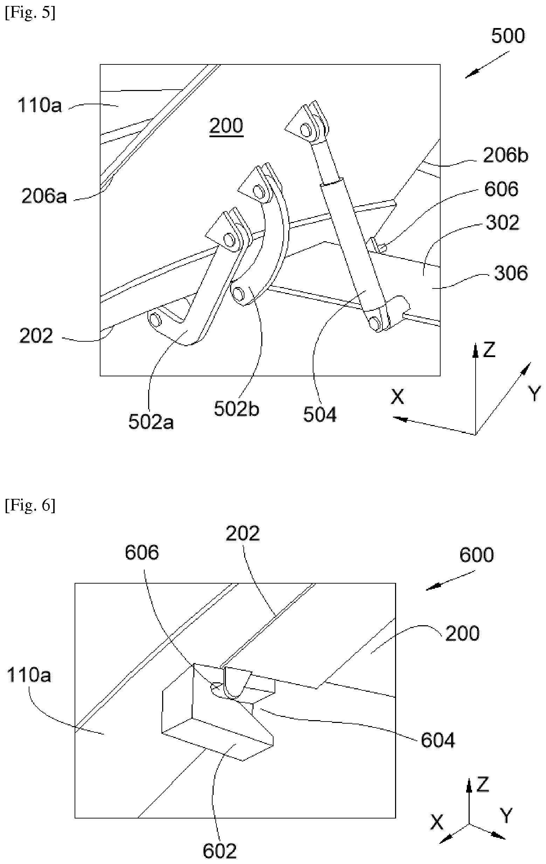

La nacelle 110 comporte une articulation (500, Fig. 5) qui est disposée au niveau du bord avant 202 et un système de verrouillage 400 qui est disposé au niveau du bord arrière 204.

La Fig. 5 montre une partie d'un exemple d'une articulation 500 qui est fixée entre le capot articulé 200 et la structure 302 de la nacelle 110 et assure le déplacement du capot articulé 200 entre la position fermée et la position ouverte et inversement.

La Fig. 4 montre une partie d'un exemple d'un système de verrouillage 400. Le système de verrouillage 400 est mobile entre une position de verrouillage dans laquelle il bloque le déplacement du bord arrière 204 par rapport à la structure 302 de la nacelle 110 et une position de déverrouillage dans laquelle il autorise le déplacement du bord arrière 204 par rapport à la structure 302 de la nacelle 110. Le système de verrouillage 400 est actionné par tous moyens appropriés comme par exemple une poignée actionnable depuis l'extérieur de la nacelle 110, ou comme par exemple une commande électrique.

Le passage de la position fermée à la position ouverte du capot articulé 200 s'effectue par basculement du capot articulé 200 autour de l'articulation 500 et par écartement du bord arrière 204 vers l'extérieur de la nacelle 110.

Un tel capot articulé 200 permet ainsi d'accéder facilement et rapidement à l'intérieur de la nacelle 110.

En outre, en position fermée, le bord avant 202 se positionne sous le capot amont 110a évitant ainsi les phénomènes d'écopage.

La Fig. 4 montre un mode de réalisation du système de verrouillage 400 où les éléments du capot articulé 200 sont montrés en transparence (traits mixtes fins).

Le système de verrouillage 400 comporte à bâbord et à tribord, une plaque de centrage 402 solidaire de la structure 302 et s'étendant globalement horizontalement vers l'avant, et un pêne 404 actionnable et mobile horizontalement sur la structure 302. La plaque de centrage 402 est percée d'une fenêtre 406 présentant un axe perpendiculaire au plan de la plaque de centrage 402.

Le système de verrouillage 400 comporte également pour chaque fenêtre 406, un plot de centrage 408 solidaire du capot articulé 200 qui sort de la fenêtre 406 en position ouverte et pénètre dans la fenêtre 406 en position fermée, assurant ainsi un maintien selon l'axe longitudinal X.

Le système de verrouillage 400 comporte également pour chaque pêne 404, une gâche 410 solidaire du capot articulé 200 dans lequel le pêne 404 pénètre en position fermée et en sort en position ouverte lorsqu'il est actionné. Dans le mode de réalisation de l'invention présenté ici, le pêne 404 s'escamote vers l'arrière pour sortir de la gâche 410.

La Fig. 5 montre une articulation 500 selon un mode de réalisation particulier, de l'invention. Sur la Fig. 5, seul le côté tribord est représenté.

L'articulation 500 comporte au moins une bielle 502a-b à bâbord et à tribord et au moins un vérin 504.

Chacune des bielles 502a-b et chaque vérin 504 présentent une première extrémité montée articulée sur la structure 302 et une deuxième extrémité montée articulée sur le capot articulé 200. Le vérin 504 assiste l'ouverture du capot articulé 200 et assure le maintien en position ouverte et est par exemple un vérin à gaz.

Une telle articulation 500 permet une grande ouverture du capot articulé 200 afin d'atteindre les systèmes de l'aéronef 100.

Afin de compenser les mouvements entre les différents éléments de la nacelle 110, la structure 302 comporte à bâbord et à tribord, une lame ressort 306 sur laquelle les premières extrémités de chaque bielle 502a-b et de chaque vérin 504 sont montées articulées.

La Fig. 6 montre le positionnement du bord avant 202 du capot articulé 200 sous le capot amont 110a en position fermée.

La Fig. 6 montre également un système de centrage radial 600 qui, en position fermée, assure un centrage selon la direction radiale de la nacelle 110 qui est ici globalement verticale.

Le système de centrage radial 600 comporte à bâbord et à tribord du capot articulé 200, un sabot 602 solidaire de la structure 302, et ici plus particulièrement du capot amont 110. Chaque sabot 602 est ici fixé sous le capot amont 110a.

Chaque sabot 602 présente une fente 604 qui débouche sur l'un des flancs latéraux du sabot 602 et qui est ouverte vers l'arrière. La fente 604 est donc délimitée vers le haut et vers le bas par les parois du sabot 602, c'est-à-dire globalement selon l'axe vertical Z.

Le système de centrage radial 600 comporte également, pour chaque fente 604, un plot centreur 606 qui est solidaire du capot articulé 200 et qui est orienté ici globalement parallèlement à l'axe transversal Y, de manière à ce que lorsque le capot articulé 200 passe de la position ouverte à la position fermée, chaque plot centreur 606 pénètre dans la fente 604 par l'ouverture à l'arrière pour y être maintenu. Inversement, lorsque le capot articulé 200 passe de la position fermée à la position ouverte, chaque plot centreur 606 sort de la fente 604.

## Revendications

1. Ensemble turbomachine (108) d'un aéronef (100) comprenant une nacelle (110), ladite nacelle (110) présentant une entrée d'air (109) et comportant :
- une structure (302),
- un capot amont (110a) fixé à ladite structure (302) afin de réaliser une surface aérodynamique et s'étendant vers l'arrière depuis l'entrée d'air (109),
- un capot articulé (200) disposé en partie haute de la nacelle (110) et à l'arrière du capot amont (110a) et comportant un bord avant (202) disposé à l'avant du capot articulé (200), un bord arrière (204) disposé à l'arrière du capot articulé (200),
- une articulation (500) disposée au niveau du bord avant (202) et fixée entre le capot articulé (200) et la structure (302), ladite articulation (500) assurant le déplacement du capot articulé (200) entre une position fermée dans laquelle le capot articulé (200) est en continuité aérodynamique avec d'autres capots (110a-b) de la nacelle (110) et une position ouverte dans laquelle le capot articulé (200) libère une ouverture dans la nacelle (110), et
- un système de verrouillage (400) disposé au niveau du bord arrière (204), et mobile entre une position de verrouillage dans laquelle il bloque le déplacement du bord arrière (204) par rapport à la structure (302) et une position de déverrouillage dans laquelle il autorise le déplacement du bord arrière (204) par rapport à la structure (302),
où en position fermée, le bord avant (202) se positionne sous le capot amont (110a),
ledit ensemble turbomachine (108) étant **caractérisé en ce que** le système de verrouillage (400) comporte à bâbord et à tribord, une plaque de centrage (402) solidaire de la structure (302) et percée d'une fenêtre (406) et un pêne (404) mobile sur la structure (302), **en ce que** le système de verrouillage (400) comporte également, pour chaque fenêtre (406), un plot de centrage (408) solidaire du capot articulé (200) et qui pénètre dans la fenêtre (406) en position fermée et sort de la fenêtre (406) en position ouverte, et **en ce que** le système de verrouillage (400) comporte également, pour chaque pêne (404), une gâche (410) solidaire du capot articulé (200) dans lequel le pêne (404) pénètre en position fermée et en sort en position ouverte lorsqu'il est actionné.

2. Ensemble turbomachine (108) selon la revendication 1, **caractérisé en ce que** l'articulation (500) comporte au moins une bielle (502a-b) à bâbord et à tribord et au moins un vérin (504), **en ce que** chacune des bielles (502a-b) et chaque vérin (504) présentent une première extrémité montée articulée sur la structure (302) et une deuxième extrémité montée articulée sur le capot articulé (200).

3. Ensemble turbomachine (108) selon la revendication 2, **caractérisé en ce que** la structure (302) comporte à bâbord et à tribord, une lame ressort (306) sur laquelle les premières extrémités de chaque bielle (502a-b) et de chaque vérin (504) sont montées articulées.

4. Ensemble turbomachine (108) selon l'une des revendications 1 à 3, **caractérisé en ce qu'**il comporte, à bâbord et à tribord du capot articulé (200), un sabot (602) fixé sous le capot amont (110a), **en ce que** chaque sabot (602) présente une fente (604) qui débouche sur l'un des flancs latéraux du sabot (602) et qui est ouverte vers l'arrière, **en ce qu'**il comporte également, pour chaque fente (604), un plot centreur (606) solidaire du capot articulé (200), et orienté de manière à ce que lorsque le capot articulé (200) passe de la position ouverte à la position fermée, chaque plot centreur (606) pénètre dans la fente (604) et lorsque le capot articulé (200) passe de la position fermée à la position ouverte, chaque plot centreur (606) sort de la fente (604).

5. Aéronef (100) comportant un mât d'accrochage (106) et un ensemble turbomachine selon l'une des revendications précédentes, accroché audit mât d'accrochage (106).

## Patentansprüche

1. Turbotriebwerksanordnung (108) eines Luftfahrzeugs (100), umfassend eine Gondel (110), wobei die Gondel (110) einen Lufteinlass (109) aufweist und Folgendes umfasst:
- eine Struktur (302),
- eine stromaufwärtige Abdeckung (110a), die an der Struktur (302) befestigt ist, um eine aerodynamische Fläche zu bilden, und sich vom Lufteinlass (109) nach hinten erstreckt,
- einen Scharnierdeckel (200), der im oberen Teil der Gondel (110) und hinter der stromaufwärtigen Abdeckung (110a) angeordnet ist und eine an der Vorderseite des Scharnierdeckels (200) angeordnete Vorderkante (202) und eine an der Rückseite des Scharnierdeckels (200) angeordnete Hinterkante (204) aufweist,
- ein Gelenk (500), das im Bereich der Vorderkante (202) angeordnet und zwischen dem Scharnierdeckel (200) und der Struktur (302) befestigt ist, wobei das Gelenk (500) die Bewegung des Scharnierdeckels (200) zwischen einer geschlossenen Position, in der der Scharnierdeckel (200) mit anderen Abdeckungen (110a - b) der Gondel (110) eine aerodynamische Kontinuität bildet, und einer offenen Position, in der der Scharnierdeckel (200) eine Öffnung in der Gondel (110) freigibt, gewährleistet, und
- ein Verriegelungssystem (400), das im Bereich der Hinterkante (204) angeordnet und zwischen einer Verriegelungsposition, in der es die Bewegung der Hinterkante (204) relativ zur Struktur (302) blockiert, und einer Entriegelungsposition, in der es die Bewegung der Hinterkante (204) relativ zur Struktur (302) zulässt, beweglich ist,
wobei in der geschlossen Position die Vorderkante (202) unter der stromaufwärtigen Abdeckung (110a) positioniert ist,
wobei die Turbotriebwerksanordnung (108) **dadurch gekennzeichnet ist, dass** das Verriegelungssystem (400) auf der Backbord- und der Steuerbordseite eine Zentrierplatte (402) aufweist, die fest mit der Struktur (302) verbunden ist und mit einem Fenster (406) und einem an der Struktur (302) beweglichen Riegel (404) durchbrochen ist, dass das Verriegelungssystem (400) außerdem für jedes Fenster (406) einen Zentrierhöcker (408) aufweist, der fest mit dem Scharnierdeckel (200) verbunden ist und in der geschlossen Position in das Fenster (406) eindringt und in der offenen Position das Fenster (406) verlässt, und dass das Verriegelungssystem (400) außerdem für jeden Riegel (404) einen Schließer (410) aufweist, der fest mit dem Scharnierdeckel (200) verbunden ist und in den der Riegel (404) in der geschlossen Position eindringt und den er in der offenen Position verlässt, wenn er betätigt wird.

2. Turbotriebwerksanordnung (108) nach Anspruch 1, **dadurch gekennzeichnet, dass** das Gelenk (500) zumindest eine Pleuelstange (502a - b) auf der Backbord- und der Steuerbordseite und zumindest einen Hubzylinder (504) aufweist und dass jede der Pleuelstangen (502a - b) und jeder Hubzylinder (504) ein an der Struktur (302) angelenktes erstes Ende und am Scharnierdeckel (200) angelenktes zweites Ende aufweisen.

3. Turbotriebwerksanordnung (108) nach Anspruch 2, **dadurch gekennzeichnet, dass** die Struktur (302) auf der Backbord- und der Steuerbordseite ein Federblatt (306) aufweist, an dem das erste Ende jeder Pleuelstange (502a - b) und jedes Hubzylinders (504) angelenkt sind.

4. Turbotriebwerksanordnung (108) nach einem der Ansprüche 1 bis 3, **dadurch gekennzeichnet, dass** sie auf der Backbord- und der Steuerbordseite des Scharnierdeckels (200) einen an der stromaufwärtigen Abdeckung (110a) befestigten Schuh (602) aufweist, dass jeder Schuh (602) einen Schlitz (604) aufweist, der in eine der seitlichen Flanken des Schuhs (602) mündet und der nach hinten offen ist, dass sie außerdem für jeden Schlitz (604) einen Zentrierhöcker (606) aufweist, der fest mit dem Scharnierdeckel (200) verbunden und so ausgerichtet ist, dass, wenn sich der Scharnierdeckel (200) aus der offenen Position in die geschlossene Position bewegt, jeder Zentrierhöcker (606) in den Schlitz (604) eindringt, und wenn sich der Scharnierdeckel (200) aus der geschlossen Position in die offene Position bewegt, jeder Zentrierhöcker (606) den Schlitz (604) verlässt.

5. Luftfahrzeug (100), umfassend einen Befestigungsmast (106) und eine am Befestigungsmast (106) befestigte Turbotriebwerksanordnung nach einem der vorangehenden Ansprüche.

## Claims

1. Turbine engine assembly (108) of an aircraft (100) comprising a nacelle (110), said nacelle (110) having an air inlet (109) and comprising:
- a structure (302),
- an upstream cowl (110a) fixed to said structure (302) in order to produce an aerodynamic surface and extending to the rear from the air inlet (109),
- an articulated cowl (200) arranged in the top part of the nacelle (110) and at the rear of the upstream cowl (110a) and comprising a front edge (202) arranged in front of the articulated cowl (200), a rear edge (204) arranged at the rear of the articulated cowl (200),
- an articulation (500) arranged at the front edge (202) and fixed between the articulated cowl (200) and the structure (302), said articulation (500) ensuring the displacement of the articulated cowl (200) between a closed position in which the articulated cowl (200) is in aerodynamic continuity with other cowls (110a-b) of the nacelle (110) and an open position in which the articulated cowl (200) frees an opening in the nacelle (110), and
- a locking system (400) arranged at the rear edge (204), and mobile between a locking position in which it blocks the displacement of the rear edge (204) relative to the structure (302) and an unlocking position in which it allows the displacement of the rear edge (204) relative to the structure (302),
in which, in closed position, the front edge (202) is positioned under the upstream cowl (110a),
said turbine engine assembly (108) being **characterized in that** the locking system (400) comprises, on the port side and on the starboard side, a centring plate (402) secured to the structure (302) and pierced by a window (406) and a bolt (404) that is mobile on the structure (302), **in that** the locking system (400) also comprises, for each window (406), a centring stud (408) secured to the articulated cowl (200) and which penetrates into the window (406) in closed position and exits from the window (406) in open position, and **in that** the locking system (400) also comprises, for each bolt (404), a strike (410) secured to the articulated cowl (200) into which the bolt (404) penetrates in closed position and from which it exits in open position when it is actuated.

2. Turbine engine assembly (108) according to Claim 1, **characterized in that** the articulation (500) comprises at least one link (502a-b) on the port side and on the starboard side and at least one cylinder (504), **in that** each of the links (502a-b) and each cylinder (504) have a first end mounted articulated on the structure (302) and a second end mounted articulated on the articulated cowl (200).

3. Turbine engine assembly (108) according to Claim 2, **characterized in that** the structure (302) comprises, on the port side and on the starboard side, a spring blade (306) on which the first ends of each link (502a-b) and of each cylinder (504) are mounted articulated.

4. Turbine engine assembly (108) according to one of Claims 1 to 3, **characterized in that** it comprises, on the port side and on the starboard side of the articulated cowl (200), a shoe (602) fixed under the upstream cowl (110a), **in that** each shoe (602) has a slit (604) which emerges on one of the side flanks of the shoe (602) and which is open toward the rear, **in that** it also comprises, for each slit (604), a centring pin (606) secured to the articulated cowl (200), and oriented so that, when the articulated cowl (200) passes from the open position to the closed position, each centring pin (606) penetrates into the slit (604) and, when the articulated cowl (200) passes from the closed position to the open position, each centring pin (606) exits from the slit (604).

5. Aircraft (100) comprising an attachment pylon (106) and a turbine engine assembly according to one of the preceding claims, attached to said attachment pylon (106).
